# EUROPEAN PATENT APPLICATION

(11) **EP 2 173 098 A1**
(43) Date of publication of application: **07.04.2010**
(21) Application number: 09793807.0
(22) Date of filing: 12.05.2009
(51) Int. Cl.: H04N 7/15

(54) **METHOD, EQUIPMENT AND SYSTEM FOR REALIZING VIDEO CONFERENCE**

(30) Priority: 11.07.2008 CN 200810116575
(71) Applicant: Huawei Technologies Co., Ltd., Shenzhen, Guangdong 518129 (CN)
(72) Inventor: YU, Hui, Shenzhen Guangdong 518129 (CN); MO, Xiaojun, Shenzhen Guangdong 518129 (CN); ZHU, Xiangwen, Shenzhen Guangdong 518129 (CN); GONG, Hao, Shenzhen Guangdong 518129 (CN)
(74) Representative: Körber, Martin Hans
(86) International application number: PCT/CN2009/071766
(87) International publication number: WO 2010/003332

(57) **Abstract**

A method, device, and system for implementing a video conference are disclosed. The method for implementing a video conference includes: creating a video image with ImageId information; defining an image data source and an image data output for the created video image; and acquiring and sending image data according to the image data source and the image data output of the video image with the ImageId information. A video conference model established by using the method is an image-based video conference model, i.e., an abstract image layer is proposed between the user layer and the video conference layer. Through the technical solutions, phenomena such as that a plurality of playback commands exists for a plurality of users, that one record is maintained for each user who watches the video image, and that time synchronization is considered when a same video image is played back for a plurality of users may be avoided. Thus, operations of the video conference are simplified, and the extensibility of the video conference is increased.

## Description

### FIELD OF THE TECHNOLOGY

The present invention relates to the field of network communication technology, and more particularly, to a method for implementing a video conference, a media resource device, a video-service management device, a system for implementing a video conference, and a video conference terminal.

### BACKGROUND

With the development of next generation network (NGN) and Internet protocol (IP) multimedia subsystem (IMS), video conference has found increasingly wide application.

In an existing video conference, it is assumed that users participating in the video conference include a user A, a user B, and a user C. The user A may be designated to watch a video of the user B through a request in a protocol, the user B may be designated to watch a video of the user C through a request in the protocol, and the user C may be designated to watch a preset video file through another request in the protocol.

On a media resource server (MRS) side, only conceptions of two layers exit, namely, the video conference layer and the user layer. In the MRS, a corresponding relation between input image data and output image data is maintained. The image data usually includes a video of a user (i.e., image data of a user) and/or a preset video file. When the video file is regarded as input data of a special user, it may be said that data interactive relations between the users are maintained in the MRS. Therefore, the current video conference is user-based, and a model of such a video conference may be referred to as a user-based video conference model.

During the process of implementing the present invention, the inventor(s) found that at least the following problems exist in the prior art.

Generally, during the process of implementing a video conference, a plurality of users participating in the conference needs to watch a same video. At this time, the user-based video conference model has to perform a plurality of video playback operations in order to enable a plurality of users participating in the conference to watch a same video. For example, for each user participating in the conference who watches the video, the MRS will receive a playback command and perform a playback operation according to the received playback command. Moreover, the MRS needs to maintain data interactive relations between a great number of users. In addition, as the playback commands received by the MRS are executed in a precedence order, if it is necessary to enable a plurality of users participating in the conference who watches a same video to watch the video at the same time, a problem of time synchronization when the video is played back for the plurality of users participating in the conference need to be considered.

In view of the above, operation of the existing user-based video conference model is complicated for implementing a video service, and adversely affects the extension of the video conference.

### SUMMARY

Accordingly, the present invention is directed to a method, device, and system for implementing a video conference, which can easily and conveniently implement a video conference, and increase the extensibility of the video conference.

In an embodiment, the present invention provides a method for implementing a video conference. The method includes the following steps.

A video image with Imageld information is created.

An image data source and an image data output are defined for the created video image.

Image data is acquired and sent according to the image data source and the image data output of the video image with the ImageId information.

In an embodiment, the present invention provides a media resource device. The device includes a CreatImage module and an OperateImage module.

The CreatImage module is adapted to create a video image with ImageId information for a video conference.

The OperateImage module is adapted to define an image data source and an image data output for the created video image, and acquire and send image data according to information of the image data source and the image data output of the video image with the ImageId information.

In an embodiment, the present invention provides a method for implementing a video conference. The method includes the following steps.

CreatImage information is sent to a media resource device for instructing the media resource device to create a video image for a video conference.

DefineImage information containing ImageId information is sent to the media resource device for instructing the media resource device to define an image data source and an image data output for a video image with the ImageId information.

In an embodiment, the present invention provides a video-service management device. The device includes a creation instruction module and a definition instruction module.

The creation instruction module is adapted to send CreatImage information to a media resource device for instructing the media resource device to create a video image for a video conference.

The definition instruction module is adapted to send DefineImage information containing ImageId information to the media resource device for instructing the media resource device to define an image data source and an image data output for a video image with the ImageId information.

In an embodiment, the present invention provides a system for implementing a video conference. The system includes a video-service management device and a media resource device.

The video-service management device is adapted to send CreatImage information and DefineImage information to the media resource device.

The media resource device is adapted to create a video image with ImageId information for a video conference according to the received CreatImage information, define an image data source and an image data output for the created video image according to the received DefineImage information, and acquire and send image data according to the image data source and the image data output of the video image with the ImageId information.

In an embodiment, the present invention provides a video conference terminal. The terminal includes a creation module and a definition module.

The creation module is adapted to receive a creation command input from outside, and send creation instruction information to a video-service management device for triggering the video-service management device to send CreatImage information to a media resource device.

The definition module is adapted to receive a definition command input from the outside, and send definition instruction information to the video-service management device for triggering the video-service management device to send DefineImage information to the media resource device.

As can be seen from the description of the above technical solutions, through operations such as creating a video image and defining an image data source and an image data output for the video image, an image-based video conference model is established, i.e., an abstract image layer is proposed between the user layer and the video conference layer, so that operations of the video conference may be implemented based on the video image, thereby enabling the image-based video conference model to better satisfy requirements of a video conference service. As the operations of the video conference are directed to the video image, phenomena such as that a plurality of playback commands exists for a plurality of users participating in the conference, that one record is maintained for each user who watches the video image, and that time synchronization needs to be considered when a same video image is played back for a plurality of users participating in the conference may be avoided. Thus, the operations of the video conference are simplified, and the extensibility of the video conference is increased.

### BRIEF DESCRIPTION OF THE DRAWINGS

Figure 1a is a schematic view of a system for implementing a video conference based on a video image;

Figure 1b is a flow chart of a method for implementing a video conference according to a specific embodiment;

Figure 2 is a schematic view of a video conference model according to a specific embodiment;

Figure 3 is a schematic view of an application scenario of the video conference model in Figure 2;

Figure 4 is a schematic view of an execution sequence for image operation messages according to a specific embodiment;

Figure 5 is a flow chart of a method for implementing a video conference according to another specific embodiment;

Figure 6 is a schematic view of a media stream connection between a media resource server (MRS) and a user according to a specific embodiment;

Figure 7 is a schematic view of a process of creating a video image according to a specific embodiment;

Figure 8 is a schematic view of a process of setting an image data source for a video image according to a specific embodiment;

Figure 9 is a schematic view of a process of setting an image data output for a video image according to a specific embodiment;

Figure 10 is a schematic view of a process of setting an image data output for a video image according to another specific embodiment;

Figure 11 is a schematic view of a process of sending image data of a video image according to a specific embodiment;

Figure 12 is a schematic structural view of a media resource device according to a specific embodiment;

Figure 13 is a schematic structural view of a video-service management device according to a specific embodiment; and

Figure 14 is a schematic structural view of a video conference terminal according to a specific embodiment.

### DETAILED DESCRIPTION

In the present invention, an abstract image layer is proposed between the user layer and the video conference layer. In such a manner, operations in a video conference service may be implemented based on a video image, i.e., the video conference service may be directed to a video image. Here, the video image is an image with an image picture attribute. The use of the video image can enable a video conference model in an embodiment of the present invention to become an image-based video conference model.

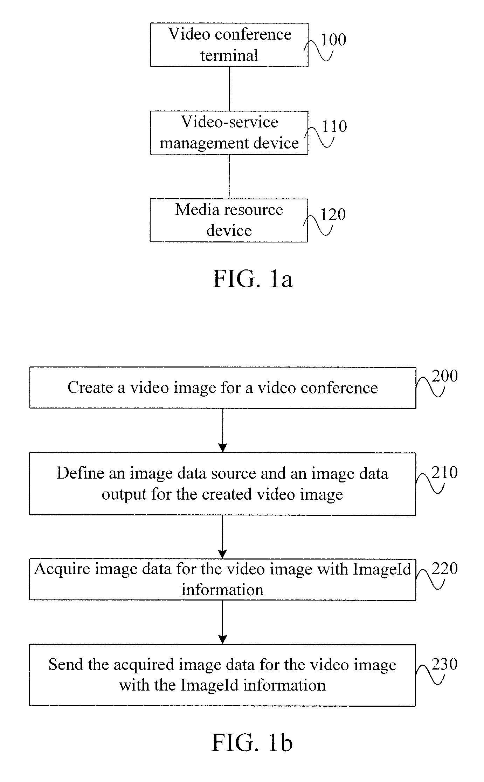

Figure 1a is a schematic view of a system for implementing a video conference based on a video image. Figure 1b is a flow chart of a method for implementing a video conference according to a specific embodiment. As shown in Figure 1a, the system includes a video-service management device 110 and a media resource device 120.

The video-service management device 110 sends create image (CreatImage) information and DefineImage information to the media resource device 120 for instructing the media resource device 120 to create a video image for a video conference, and define information such as an image data source and an image data output for the video image. The CreatImage information and the DefineImage information may contain ImageId information. The CreatImage information may also contain image attribute information.

The media resource device 120 creates a video image with the ImageId information for a video conference according to the CreatImage information sent from the video-service management device 110, defines an image data source and an image data output for the video image according to the DefineImage information sent from the video-service management device 110. The media resource device 120 acquires image data according to the image data source of the video image, and sends the image data according to the image data output of the video image.

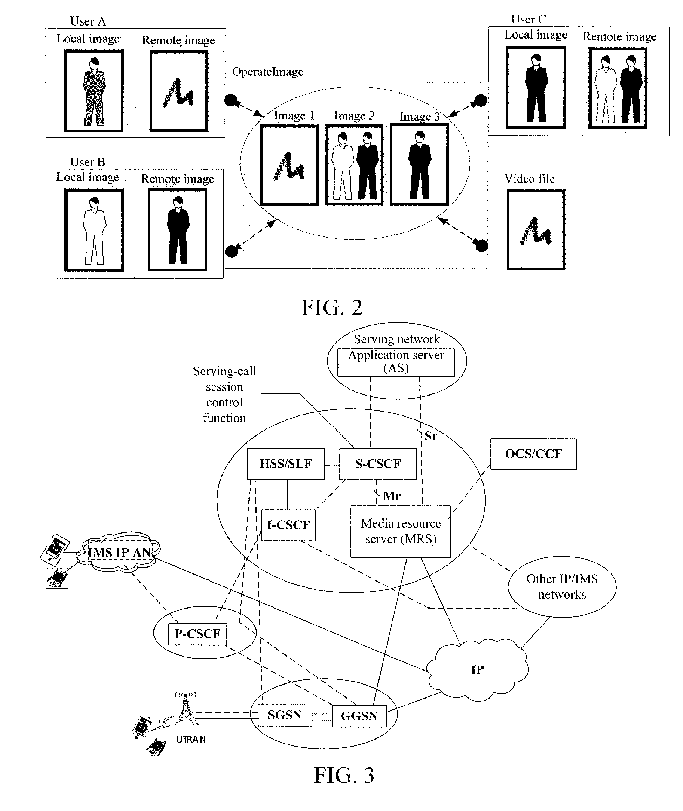

The system may further include one or more video conference terminals 100. The video conference terminal 100 is adapted to receive a command inputted from outside, for example, a creation command and a definition command. After receiving the creation command, the video conference terminal 100 sends creation instruction information to the video-service management device 110, so that after receiving the creation instruction information, the video-service management device 110 sends the CreatImage information to the media resource device 120 according to the creation instruction information. After receiving the definition command inputted from outside, the video conference terminal 100 sends definition instruction information to the video-service management device 110, so that after receiving the definition instruction information, the video-service management device 110 sends the DefineImage information to the media resource device 120 according to the definition instruction information. A specific embodiment of the method for implementing a video conference is illustrated below with reference to Figure 2b.

In Figure 1b, Step 200, a video image with ImageId information is created for a video conference. In other examples, the video image may further include an image picture attribute. The process proceeds to Step 210.

The ImageId information is adapted to identify the created video image. The ImageId information should be able to uniquely identify one created video image, i.e., one ImageId should be corresponding to one video image. The ImageId information may be formed by an ID of a video conference and a sequence number assigned sequentially to each video image in the video conference, and may also be formed by a sequence number assigned sequentially to each video image in each video conference only.

The image picture attribute may be an image picture size, an image background color, and the like. The image picture attribute may be set according to actual requirements. In addition, the image picture attribute may also be contained in subsequent DefineImage information, or default settings for CreatImage information. When the image picture attribute is protected in the subsequent DefineImage information, it means that the image picture attribute of the created video image is modified by the subsequent DefineImage information.

A network device that creates a video image for a video conference may be a media resource device. In an Internet protocol (IP) multimedia subsystem (IMS), the media resource device may be referred to as a media resource function (MRF). In a next generation network (NGN), the media resource device may be referred to as a media resource server (MRS). The MRS may create a video image when a video conference is created, or after the video conference is successfully created. One or more video images may be created for the video conference.

After receiving a message carrying CreatImage information, the MRS may create one or more video images according to the CreatImage information. The MRS may create a video image without receiving the CreatImage information. For example, after the MRS receives a message for creating a video conference and successfully creates the video conference according to the message, the MRS creates one or more video images according to default setting information.

When a plurality of video images needs to be created for one video conference, the video images may be created successively, and may also be created at the same time. It is to be further noted that all video images of one video conference may be created successively in batches, and one or more video images may be created in one batch.

The CreatImage information may contain ImageId information (or a rule for generating the ImageId information), an image picture attribute of a video image, and the like. Definitely, the CreatImage information may not contain one or both of the ImageId information and image picture attribute information. One or both of the ImageId information and the image picture attribute information may also be stored in the MRS. The default setting information may include the ImageId information (or the rule for generating the ImageId information), a default image picture attribute, and the like. Here, one or more pieces of Imageld information may exist.

The message carrying the CreatImage information may be a message dedicated to carrying the CreatImage information, and may also be an existing message. When the existing message is used to carry the CreatImage information, the existing message may be extended for carrying the CreatImage information in the existing message.

An entity that sends the message carrying the CreatImage information may be located in video-service management side, for example, an application server (AS), or a serving-call session control function (S-CSCF).

After creating the video image, the MRS may optionally send a response message to the video-service management side. The response message may carry information indicating that the video image is successfully created, and may also carry information indicating that the video image fails to be created. The information indicating that the video image is successfully created may include one or more of: ID information of a video conference, the number of created video images, attribute information of each video image, and identification information for a successful creation.

In different embodiments, the following contents may vary, and may be replaced or improved by those skilled in the art, and details thereof will not be described herein: for example, conditions for triggering the process of creating the video image, a specific name of the message carrying the CreatImage information, information contents carried in the response message, contents contained in the image picture attribute, and a name of a specific network device embodied on the video-service management side.

Step 210: An image data source and an image data output are defined for the created video image. In other examples, other contents or parameters such as an image picture attribute may also be defined. The process proceeds to Step 220.

The image data source is adapted to represent input information of the video image, i.e., source end information of image data that is output for the video image. The image data source may be a preset video file, and may also be information of one or more users who participate in the video conference. Definitely, the image data source may also be a preset video file and information of a user who participates in the video conference, and may also be a preset video file and information of some users who participate in the video conference. When the input information of the video image includes a plurality of source ends, a multi-picture display may need to be performed.

The image data output is adapted to represent output information of the video image, i.e., destination end information of the image data (the image data may also be referred to as video data) of the video image. The destination end information may be information of a user who watches the video image, i.e., information of a user who receives the image data of the video image. The destination end information may also be storage information of the video file, i.e., the image data input by the video image is output into a video file of an MRS or other network devices. The image data output information may be information of a user who participates in the video conference, or information of some users who participate in the video conference, and may also be information of a user who participates in the video conference and storage position information of the video file, or information of some users who participate in the video conference and storage position information of the video file.

In other specific embodiments, other contents or parameters may further be defined for the created video image. For example, information adapted to illustrate the video image, such as a video conference that the video image belongs to and remark information of the video image, is defined; or an image picture attribute is defined for the video image, which is equivalent to modifying the image picture attribute of the created video image. Other examples will not be enumerated herein.

A network device that performs the operation of defining the video image may be an MRS. After successfully creating the video image, the MRS may perform a define-operation on the created video image according to default setting information stored therein. The MRS may also define parameters such as an image data source, an image data output, and an image picture attribute for the created video image, after receiving a message carrying DefineImage information. The DefineImage information may include ImageId information, image data source information, and image data output information. Optionally, the DefineImage information may also include image picture attribute information. The default setting information for the define-operation may also contain the ImageId information, the image data source information, and the image data output information.

The message carrying the DefineImage information may be a message dedicated to carrying the Definelmage information, and may also be an existing message. When the existing message is used to carry the Definelmage information, the existing message may be extended for carrying the DefineImage information in the existing message. An entity that sends the message carrying the DefineImage information may be a video-service management side, for example, an AS, or an S-CSCF.

After performing the define-operation on the created video image, the MRS may optionally send a response message to the video-service management side. The response message may carry information indicating that the video image is successfully defined, and may also carry information indicating that the video image fails to be defined. The information indicating that the video image is successfully defined may contain ID information of a video conference, parameters defined for the video image, and the like.

After performing the define-operation, the MRS stores information of the video image. For example, the MRS stores a record for the video image. The record includes the ImageId information, the image picture attribute information, the image data source information, the image data output information, and the like. In such a manner, although a plurality of image data sources of the video image may exist, and a plurality of pieces of image data output information of the video image may exist, the MRS only needs to store one record. The operation that the MRS stores the information of the video image may be accomplished in many steps. For example, during the process of creating the video image, the ImageId information and the image picture attribute information are stored for the video image; and during the define-operation, the image data source information and the image data output information are added into the information stored for the video image.

In different embodiments, the following contents may vary, and may be replaced or improved by those skilled in the art, and details thereof will not be described herein: for example, conditions for triggering the operation of defining the video image, a specific name of the message carrying the DefineImage information, information contents carried in the response message, and a name of a specific network device embodied on the video-service management side.

Step 220: Image data is acquired for the video image with the ImageId information, i.e., the image data is acquired according to the image data source of the video image with the ImageId information. The process proceeds to Step 230.

A network device that performs Step 220 may be an MRS. The MRS may directly acquire the image data according to the image data source defined for the video image after successfully performing the operation of defining the video image. The MRS may also acquire the image data according to the image data source defined for the video image after receiving a message carrying information for acquiring the image data. The information for acquiring the image data contains the ImageId information.

The message carrying the information for acquiring the image data may be a message dedicated to carrying the information for acquiring the image data, and may also be an existing message. When the existing message is used to carry the information for acquiring the image data, the existing message may be extended for carrying the information for acquiring the image data in the existing message.

An entity that sends the message carrying the information for acquiring image data may be a video-service management side, for example, an AS, or an S-CSCF.

The image data acquired by the MRS according to the image data source information may be one or more preset video files; or image data of an input user, i.e., a video of the input user; or a preset video file and the image data of the input user. Here, one or more input users may exist. That is to say, the process that the MRS acquires the image data may include: searching for a stored preset video file, and/or receiving the image data sent from the input user.

After acquiring the image data, the MRS may optionally send a report message to the video-service management side. The report message may carry information indicating that the image data is successfully acquired, and may also carry information indicating that the image data fails to be acquired. The information indicating that the image data is successfully acquired may include the ImageId information, the image data source information, identification information indicating that the image data is successfully acquired, and the like.

In different embodiments, the following contents may vary, and may be replaced or improved by those skilled in the art, and details thereof will not be described herein: for example, conditions for triggering the process of acquiring the image data, a specific name of the message carrying the information for acquiring the image data, information contents carried in the report message, a process of searching for a preset video file, a position where the preset video file is stored, a name of a specific network device embodied on the video-service management side, and the like.

Step 230: The acquired image data is sent for the video image with the ImageId information, i.e., the image data is sent according to the image data output of the video image with the ImageId information.

A network device that performs Step 230 may be an MRS. The MRS may directly send the image data according to the image data output defined for the video image after successfully performing the operation of acquiring the image data. The MRS may also send the image data according to the image data output defined for the video image after receiving a message carrying information for sending the image data. The information for sending the image data contains the ImageId information. The process of sending the image data includes sending the image data to a user participating in the conference and/or to a video file. When the image data output is a video file, video recording is implemented. When the image data source is a preset video file or a user participating in the conference, and the image data output is a user, video playback is implemented.

The message carrying the information for sending the image data may be a message dedicated to carrying the information for sending the image data, and may also be an existing message. When the existing message is used to carry the information for sending the image data, the existing message may be extended for carrying the information for sending the image data in the existing message.

An entity that sends the message carrying the information of the image data obtained may be a video-service management side, i.e., a video-service management device, for example, an AS, or an S-CSCF.

The MRS sends the image data according to one or more preset video files, and may also send the image data according to the received image data of the input user, or send the image data according to the preset video file and the image data of the input user. Here, one or more input users may exist. That is to say, depending on different image data sources of the video image and different image picture attributes, the image data sent by the MRS to a user may be presented to the user participating in the conference in a single picture mode, a picture in picture mode, a multi-picture mode, or other modes.

After performing the operation of sending the image data, the MRS may optionally send a report message to the video-service management side. The report message may carry information indicating that the image data has been sent, and may also carry information indicating that the image data fails to be sent.

In different embodiments, the following contents may vary, and may be replaced or improved by those skilled in the art, and details thereof will not be described herein: for example, conditions for triggering the operation of sending image data, a specific name of the message carrying the information for sending the image data, information contents carried in the report message, a specific form in which the sent image data is presented to the user participating in the conference, a process of recording a video file, a position where the recorded video file is stored, a name of a specific network device embodied on the video-service management side, and the like.

It should be noted that after the video image is defined, the information defined for the video image may be modified. For example, during the video conference, when a user joins in the video conference or exits the video conference, parameters such as the image data source and the image data output of the video image may be changed, and at this time, the parameters of the video image need to be modified. The modification process may include: modifying the image data output of the video image for changing users that watch the video image, or adding user information into and/or removing user information from the image data source of the video image. The modification may be performed before or during processes such as the video playback process and the video recording process. The process of modifying the parameters of the video image is a process of redefining the parameters of the video image. Therefore, the process of modifying the parameters of the video image may also be referred to as a process of redefining the video image.

The process of modifying the parameters of the video image may be as follows: a video-service management side sends modification information to an MRS, and the MRS modifies parameters of the video image stored therein according to the received modification information. The parameters of the video image stored in the MRS may include ImageId information, image picture attribute information, an image data source, an image data output, and the like.

As the parameters of the video image stored in the MRS are based on the video image, a phenomenon that a record is maintained for each user participating in the conference who watches the video image may be avoided.

After redefining the parameters of the video image, the MRS may return response information to the video-service management side for notifying the video-service management side that the parameters of the video image are successfully defined.

In other embodiments, in cases where the video image needs to be deleted, such as when the video conference is ended, all image data sources of the video image exit the video conference, or all users watching the video image exit the video conference, the MRS needs to delete the corresponding video image. The MRS may delete the corresponding video image according to the received DeleteImage information. For example, after the MRS receives a message carrying the DeleteImage information sent from the video-service management side, the MRS acquires the ImageId information from the DeleteImage information, and then deletes the video image with the ImageId information.

After deleting the video image, the MRS may return response information to the video-service management side for notifying the video-service management side that the video image is successfully deleted.

As can be seen from Step 210, Step 220, Step 230 for sending the image data, although a plurality of users or other receiving objects may watch the video image at the same time, as the video-service management side delivers a command (for example, a send command) based on the video image, one command may be used to indicate that the image data is sent to the plurality of users or other receiving objects, thereby avoiding sending a command for each of the users or other receiving objects. Likewise, although the sources of the video image may be a plurality of users or video files, as the video-service management side delivers a command (for example, a send command) based on the video image, one command may be used to indicate that image data is acquired from the plurality of users or other video files, thereby avoiding sending a command for acquiring the image data for each of the users participating in the conference or other video files. In such manner, the processes of sending and acquiring the image data are simplified, and the MRS does not need to consider a problem of time synchronization when a same video image is played back for a plurality of users.

Through the above embodiments, an image-based video conference model may be established. The video conference model includes a video conference layer, an image layer, and a user layer. The video conference layer may include a conference ID and a conference attribute of the video conference, and the like. The image layer includes one or more video images. The image layer may enable some operations in the video conference to be embodied as image-based operations. The user layer may include one or more users participating in the conference. One user participating in the conference may provide input data for one or more video images in the image layer, but can only receive image data of one video image. Moreover, a plurality of users participating in the conference may watch image data of a same video image at the same time (i.e., outputs of one video image may include one or more users).

Figure 2 is a schematic view of a video conference model according to a specific embodiment. A specific example of the image-based video conference model may be as shown in Figure 2. Three video images are defined in Figure 2, with corresponding ImageIds, image data sources, image data outputs, and image picture attributes. The ImageIds of the video images are Image1, Image2, and Image3, respectively.

An input of the video image Image1 is a preset video file, and an output of the video image Image1 is a user A, i.e., the user A watches the preset video file. Inputs of the video image Image2 are a user B and a user C, and an output of the video image Image2 is the user C. An input of the video image Image3 is the user C, and an output of the video image Image3 is the user B. The image picture attributes of the three video images may be set according to actual requirements. For example, the image picture attribute may include a picture size, a picture background color, a multi-picture attribute, and the like. The multi-picture attribute includes four-picture, six-picture, and the like.

As can be seen from the image-based video conference model as shown in Figure 2, some operations in the video conference are video image-based operations. That is to say, no matter whether it is desired to implement a lecture mode, a multi-picture service, video playback, video recording, or to extend a new video service in the video conference, all operations are performed based on the video image. By performing the operation of creating a video image, the operation of defining an image data source, an image data output, an image picture attribute (how to construct an image with input data of the video image) for the video image, and the operation of acquiring and sending image data for the video image, data interactive relations between the users may be masked, and which users watching image data of which image data sources may be designated through an independent protocol request operation. In addition, the image-based video conference model better satisfies the logic of a video conference service, and enables the video conference service to control the users to watch different video images according to different service attributes of the users, thereby establishing a clear hierarchy for implementing the video conference service. Moreover, the image-based video conference model facilitates extension of the video service. For example, if a 6-picture function supported by the current video conference needs to be extended to a 16-picture function, it only needs to extend a video conference service interface based on the video image, as long as the MRS supports the modified image picture attribute.

Figure 3 is a schematic view of an application scenario of the video conference model in Figure 2. A system for implementing a video conference in an IMS is as shown in Figure 3. The system includes an MRF, an AS, and an S-CSCF.

In the IMS as shown in Figure 3, the MRF is an MRS. Media resource control interfaces of the MRF are an Mr interface and an Sr interface. The Mr interface is an interface between the MRF and the S-CSCF. The Sr interface is an interface between the AS and the MRF. The AS and the S-CSCF may both be video-service management devices. The Mr interface and the Sr interface may both be session initiation protocol (SIP)-based interfaces. In such a manner, in the IMS application scenario, operations of the AS (or the S-CSCF) and the MRF for the video image, such as that the AS (or the S-CSCF) controls the MRF to create a video image and define the video image, and that the MRF reports ImageResult information to the AS or the S-CSCF, may be implemented by extending the SIP of the Mr interface and the Sr interface.

In a specific embodiment, the following operations may be performed to implement a video image-based video conference: a CreatImage operation, an OperateImage operation, a ResultImage operation, and a DeleteImage operation, which are specifically described as follows.

The CreatImage operation is performed for enabling the AS or the S-CSCF to instruct the MRS to create a video image. The MRS creates the video image according to the instruction of the AS or the S-CSCF. According to actual requirements, the MRS may also allocate resources for a created video image example, and activate the video image example. For example, when a video file needs to be recorded, the MRS needs to allocate resources for the video image example. Parameters for the CreatImage operation may include ImageId, ImageSizeInfo, ImageBackColor, and the like.

The OperateImage operation is performed for enabling the MRS to define the created video image, for example, define an image data source, an image data output, and an image picture attribute of the video image, and the like. Parameters for the OperateImage operation may include ImageId, ImageInput, ImageOutput, and the like.

The ResultImage operation is performed for enabling the MRS to return ImageResult information to the AS (or the CSCF). The result information includes information indicating that video playback is completed, information indicating that image data recording is completed, and the like. Parameters for the ResultImage operation may include Imageld, ImageResult, and the like.

The DeleteImage operation is performed for enabling the MRS to delete one or more video images. In addition, when a video image is allocated with resources, the MRS may also release the resources occupied by the video image. Parameters for the DeleteImage operation may include ImageId, and the like.

The parameter ImageId is adapted to represent a video image in a video conference, i.e., is an ImageId of the video image. One or more video images may exist in a video conference. The plurality of video images may be identified and distinguished through the ImageId. One ImageId only identifies one video image.

The parameter ImageSizeInfo is adapted to represent a picture size of a video image.

The parameter ImageBackColor is adapted to represent a background color of a video image.

The ImageInput is adapted to represent an image data source of a video image, i.e., an input of the video image. If the image data source includes image data of a user participating in the video conference, the ImageInput needs to be able to represent information of the user participating in the video conference, and the ImageInput may further represent information such as a position and a zooming ratio of the image data of the user (i.e., a picture of the user) in the image. If the image data source includes data of a preset video file, the ImageInput needs to represent an attribute (for example, a file name) of the video file, and the ImageInput may further represent information such as a position, a zooming ratio, and playback duration of a picture corresponding to the video file in the video image, thereby implementing a video playback function. If it is desired to implement a text display function (i.e., a function of displaying a text in a picture), the ImageInput needs to be able to represent information such as contents, a font, and a character library type of a character string, and the ImageInput may further represent information such as a position and a zooming ratio of the character string in the displayed picture.

The parameter ImageOutput is adapted to represent image data output information of the video image. If image data is output to a user participating in the video conference, the ImageOutput needs to represent information of the user participating in the video conference. If it is desired to implement a video recording function (i.e., a function of outputting the image data to a video file), the ImageInput needs to be able to represent information such as an attribute (for example, a file name) of the video file, a format of the video file, a picture size, and a frame frequency.

The parameter ImageResult is adapted to represent execution result information of the OperateImage operation. After completing the OperateImage operation, the MRS may feedback the execution result information of the Operatelmage operation to the video-service application layer (i.e., the video-service management side) such as the AS through the parameter ImageResuIt.

The above four operations may be embodied as sending four image operation messages. In the present invention, a manner in which each parameter is carried in a message is not limited. In addition, a video conference terminal may trigger the above operations by sending corresponding information to the video-service management device such as the AS or the S-CSCF. For example, the video conference terminal sends creation instruction information to the video-service management device for triggering the CreatImage operation; or the video conference terminal sends definition instruction information to the video-service management device for triggering the OperateImage operation.

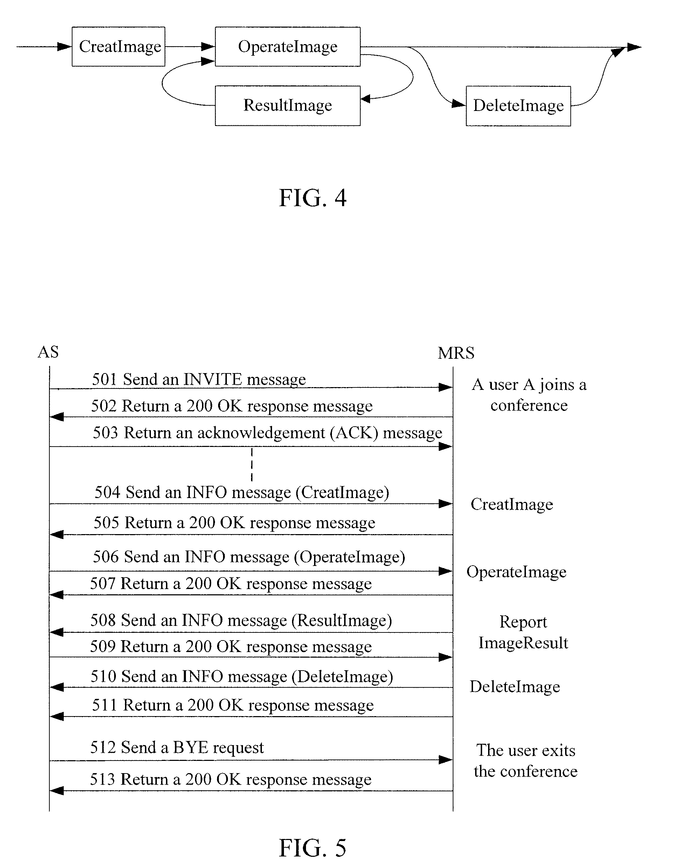

Figure 4 is a schematic view of an execution sequence for image operation messages according to a specific embodiment. Figure 4 is a schematic view of an execution sequence for implementing a video conference in the IMS system as shown in Figure 3 by using image operation messages.

In Figure 4, the AS or the S-CSCF triggers the MRS to create a video image through a CreatImage operation message. After the video image is created, the AS or the S-CSCF triggers the MRS to perform operations such as defining parameters for the created video image and acquiring input image data and output image data through an OperateImage operation message. In the process of performing the OperateImage operation triggered by the OperateImage operation message, the MRS may report execution result information of the OperateImage operation to the AS or the S-CSCF through a ResultImage message. The AS or the S-CSCF may continue to perform the logic of the video conference service according to the execution result information reported by the MRS. In the process of performing the logic of the video conference service, if the AS determines that the OperateImage operation needs to be continued, the AS or the S-CSCF may continue to deliver an OperateImage operation message to the MRS for instructing the MRS to continue to perform the subsequent OperateImage operation. In the process of the OperateImage operation for the entire video image, the AS or the S-CSCF may interact with the MRS for several times through OperateImage operation messages and ResultImage messages. If the OperateImage operation does not need to be continued, the AS or the S-CSCF may deliver a DeleteImage operation message to the MRS for ending the process of the OperateImage operation. In the above operation processes, if the operations are corresponding to the same video image, the operation messages must contain the same ImageId.

In another embodiment, if the above image operation messages are implemented in an SIP, SIP message bodies may be extended for carrying the image operation messages in the SIP message bodies, thereby enabling the AS or the S-CSCF to control the MRS to perform the CreatImage operation, the OperateImage operation, and the DeleteImage operation, and enabling the MRS to perform the ResultImage operation to report ImageResult information to the AS or the S-CSCF.

A specific example for implementing the image operation messages by using SIP may be: adding new application types into an SIP message body, for example, adding a content-type with an application type of vid; and carrying specific image operation information such as CreatImage information, OperateImage (or DefineImage) information, DeleteImage information, and report contents in the message body.

If the content-type is added into the SIP message body, the following definition may be applied in the SIP message.
Content-type=<Content-type_parmater>
Content-type_parmater="application/vid"

The above definition represents that: when a value of the content-type is application/vid, the information carried in the message body is image operation information.

The image operation information carried in the message body may be defined as the following format:
MessageType=<message-type>
Message_len=<length_value>
MessageContent=<message-content>;
message-type="ci"/"oi"/"ri'7"di"/
length_value=1* (DIGIT)
message-content=byte-string

In the above definition, ci represents the CreatImage operation, oi represents the OperateImage operation, ri represents the ResultImage operation, di represents the DeleteImage operation, and the parameter message-type may be set as a mandatory parameter.

The parameter Message_len in the above definition represents a length of the parameter message-content carried in the message body, and the parameter Message_len may be set as an optional parameter. When the parameter message-content carries information such as ImageId information, the parameter Message_len may be set.

The message-content in the above definition carries parameter data required by the image operation, such as ImageId information. The message-content may be set as an optional parameter, so that the message-content will carry no information unless the parameter data is required by the image operation. A length of the information carried in the message-content may be represented by the parameter Message_len. The message-content may be positioned adjacent to the Message_len, and may also be set after the parameter Message_len. The message-content may be set by an upper layer service of the AS or the S-CSCF, and received and resolved by a service script of the MRF.

A method for implementing a video conference is illustrated below with reference to FIGS. 5 to 11 by an example in which a video-service management side is an AS, a media resource device is an MRS, and an application scenario is an IMS.

Figure 5 is a flow chart of a method for implementing a video conference according to another specific embodiment. A flow chart of a method for implementing a video conference according to an embodiment of the present invention is as shown in Figure 5.

In Step 501, an AS sends an INVITE message to an MRS for establishing a connection between user equipment (UE) and the MRS. A message body of the INVITE message carries session description protocol (SDP) information of the UE.

In Step 502, after receiving the INVITE message sent by the AS, the MRS returns a 200 OK response message to the AS. The MRS may carry local SDP information of an MRF in the 200 OK response message.

In Step 503, after receiving the 200 OK response message, the AS returns an acknowledgement (ACK) message to the MRS.

If users that participate in a video conference include a user A, a user B, and a user C, Steps 1 to 3 need to be performed between the AS and the MRS for each user. After the above steps are completed, the users A, B, and C join the video conference. Afterward, a media stream connection is established between the MRS and each user.

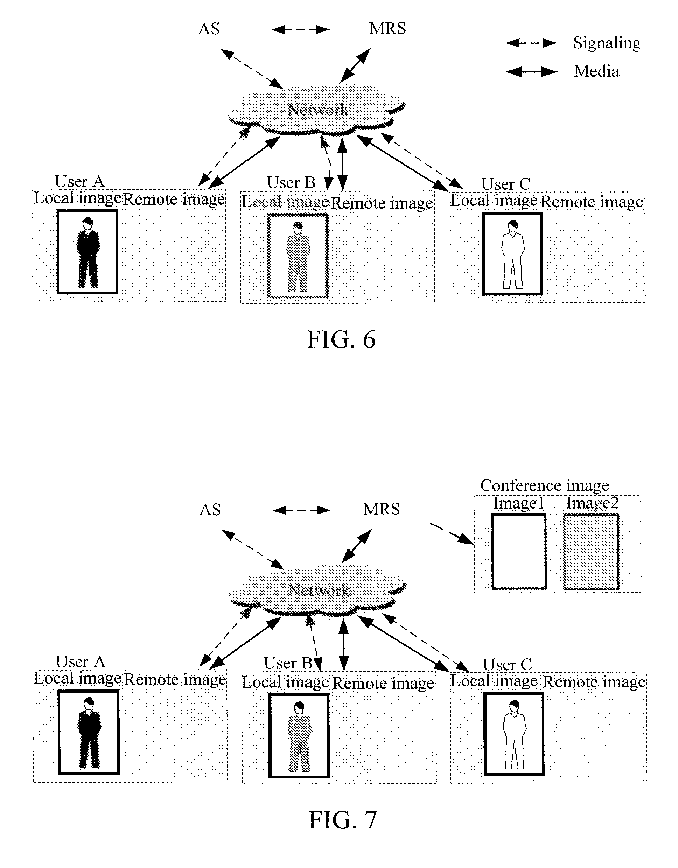

Figure 6 is a schematic view showing that the users A, B, and C join the video conference, and that a media stream connection is established between the MRS and each user.

Figure 6 is a schematic view of a media stream connection between an MRS and a user according to a specific embodiment. As can be seen from Figure 6, although a media stream connection is established between each of the user A, the user B, and the user C, and the MRS, remote images that the user A, the user B, and the user C can see are all dark screens.

In Step 504, after the media stream connection is established between the UE and the MRS, the AS sends an INFO message to the MRS, and a message body of the INFO message carries a Creatlmage message.

A specific example of the CreatImage message carried in the INFO message may be as follows.
Content-Length:...
Content-Type=application/vid
MessageType=ci
Message_len=60
MessageContent=ImageId: 1;ImageSizeInfo:cif;ImageBackColor:RGB(255,255,255)

The above CreatImage message represents that: for an image 1, an image size is cif, and an image background color is RGB.

In Step 505, after receiving the INFO message, the MRS returns a 200 OK message to the AS; and at the same time, the MRS performs an operation of creating a video image according to the CreatImage message carried in the INFO message.

Figure 7 is a schematic view of a process of creating a video image according to a specific embodiment. As shown in Figure 7, a schematic view of video images creating in a specific example is presented. In Figure 7, the MRS successfully creates two video images according to the CreatImage message carried in the INFO message. ImageIds of the two video images are an image 1 and an image 2. The image 1 and the image 2 are video images associated with the video conference, i.e., the image 1 and the image 2 are video images in the video conference. The MRS may set image attribute information of the two video images, for example, set image sizes and background colors of the video images. The MRS may set the image attribute information of the video images according to default setting information stored therein, and may also set the image attribute information of the video images according to information in the CreatImage message carried in INFO message sent by the AS.

It should be noted that a process of creating a video image and a process of creating a video conference may be combined into one, i.e., when the video conference is being created, several video images associated with the video conference are created by default.

In Step 506, the AS sends an INFO message to the MRS, and a message body of the INFO message carries an OperateImage operation message for instructing the MRS to perform OperateImage operations such as defining the video image, acquiring input image data, and sending the image data.

A specific example of the OperateImage operation message carried in the INFO message body is as follows.
Content-Length:...
Content-Type=application/vid
MessageType=oi
Message_len=45
MessageContent=ImageId: 1;ImageInput:userA;ImageOutput:userB

The above OperateImage operation message represents that: for the image 1, an image data source (i.e., an input) is the user A, an image data output is the user B; i.e., the OperateImage operation message instructs the MRS to send a video of the user A to the user B. In the above example of the OperateImage operation message, the image data source and the image data output are transmitted through an SIP message. In an embodiment of the present invention, the image data source information and the image data output information may also be transmitted through a plurality of SIP messages.

In Step 507, after receiving the INFO message, the MRS sends a 200 OK response message to the AS; and at the same time, the MRS performs the OperateImage operation according to the information in the OperateImage operation message carried in the INFO message body.

For example, the definition in Step 506 is applied to the video image 1 (the image data source is the user A, and the image data output is the user B), the video of the user A is acquired, and the acquired image data of the user A is sent to the user B, i.e., the image data of the user A is sent to the user B.

For Steps 506 to 507, different modes may be adopted for defining the video image. For a same video image, definitions on different aspects may be made successively or at the same time; and for different video images, same or different definitions may be made successively or at the same time. In other words, the AS may modify the image data output information and/or the image data source information of a video image, i.e., the video image may be switched, so the AS may send a video image to other users or to other video files by delivering information about an image switching operation to the MRS.

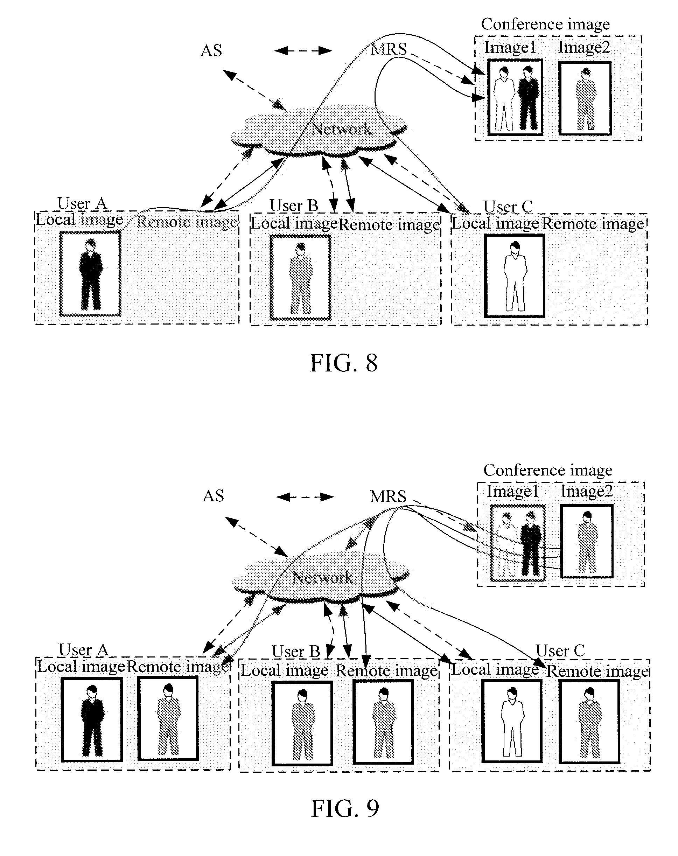

Figure 8 is a schematic view of a process of setting an image data source for a video image according to a specific embodiment. For example, a mode for defining the video image is to designate or define the user A and the user C as image data sources of the video image 1. At this time, a state of the video conference model is as shown in Figure 8. Here, the image data of the user A is represented by a black human silhouette, the image data of the user C is represented by a white human silhouette, and the video image 1 is represented by a black human silhouette and a white human silhouette in parallel.

Figure 9 is a schematic view of a process of setting an image data output for a video image according to a specific embodiment. Another mode for defining the video image is to designate or define the user B as an image data source of the video image 2, and the user A, the user B, and the user C as image data outputs of the image 2. At this time, a state of the video conference model is as shown in Figure 9. Here, video images of the user B and the image data source of the video image 2 are all represented by a gray human silhouette.

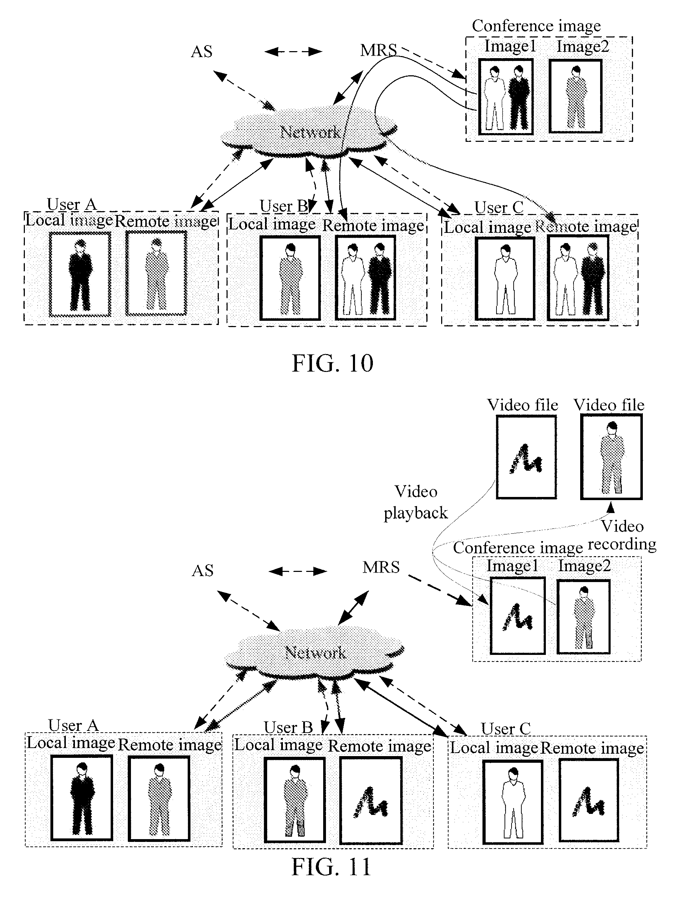

Figure 10 is a schematic view of a process of setting an image data output for a video image according to another specific embodiment. Another mode for defining the video image is to designate or define the user A and the user C as image data sources of the video image 1, and the user B and the user C as image data outputs of the image 1. At this time, a state of the video conference model is as shown in Figure 10. Here, the image data of the user A is represented by a black human silhouette, the image data of the user C is represented by a white human silhouette, and the video image 1 is represented by a black human silhouette and a white human silhouette in parallel.

Figure 11 is a schematic view of a process of sending image data of a video image according to a specific embodiment. Another mode for defining the video image is to designate or define a preset video file as an image data source of the video image 1, and the user B and the user C as image data outputs of the video image 1; and designate or define the user B as an image data source of the video image 2, and a video file and the user A as image data outputs of the image 2. At this time, a state of the video conference model is as shown in Figure 11. Here, the preset video file is represented by an M-shaped icon, and a video image of the user B, the image data source of the video image 2, and the image data outputs of the video image 2 are all represented by a gray human silhouette.

In Step 508, after completing the OperateImage operation required by the INFO message, the MRS reports an INFO message carrying an OperateImage operation message body to the AS for reporting ImageResult information such as information indicating that video playback is completed and information indicating that data recording is completed to the AS.

A specific example of the OperateImage operation message body carried in the INFO message may be as follows.
Content-Length:...
Content-Type=application/vid
MessageType=ri
Message_len=30
MessageContent=ImageId: 1 ;ImageResult:Success

The above OperateImage message body represents that: for the image 1, the video playback is successfully completed.

In Step 509, after receiving the INFO message, the AS returns a 200 OK response message to the MRS.

In Step 510, the AS sends an INFO message carrying a DeleteImage operation message body to the MRF for instructing the MRS to delete the video image. For example, when no user watches the video image, the AS requests the MRS to delete the video image.

A specific example of the DeleteImage operation message body carried in the INFO message may be as follows.
Content-Length:...
Content-Type=application/vid
MessageType=di
Message_len=10
MessageContent=ImageId:1

The above DeleteImage operation message body represents: deleting the image 1.

In Step 511, after receiving the INFO message sent by the AS, the MRS returns a 200 OK response message to the AS; and at the same time, the MRF performs a DeleteImage operation according to the DeleteImage message body carried in the INFO message for deleting the corresponding video image, for example, delete the image 1.

In Step 512, the AS sends a BYE request to the MRS according to a user state change for releasing a session of a user in the video conference. For example, if a user needs to exit the video conference, the AS sends the BYE request to the MRS.

In Step 513, after receiving the BYE request, the MRS returns a 200 OK response message to the AS.

In the process as shown in Figure 5, a video image is created after a video conference is successfully created. In another specific embodiment, a video image may also be created when a video conference is created. For example, CreatImage information is carried in a message for creating a video conference. Thus, the process of creating a video image may be simplified.

Through the above description of the embodiments, it is apparent to those skilled in the art that the present invention may be accomplished by software on a necessary hardware platform, and definitely may also be accomplished by hardware; however, in most cases, the former one is preferred. Therefore, the technical solutions of the present invention or the part thereof that makes contributions to the prior art can be substantially embodied in the form of a software product. The computer software product may be stored in a storage medium such as a read-only memory (ROM)/random access memory (RAM), a magnetic disk, or an optical disk, and contain several instructions to instruct a computer device (for example, a personal computer, a server, or a network device) to perform the method as described in the embodiments of the present invention or in some parts of the embodiments.

As can be seen from the description of the method, through operations such as creating a video image and defining an image data source and an image data output for the video image, an image-based video conference model is established, i.e., an abstract image layer is proposed between the user layer and the video conference layer, so that operations of the video conference may be implemented based on the video image, thereby enabling the image-based video conference model to better satisfy requirements of a video conference service. As the operations of the video conference are directed to the video image, phenomena such as that a plurality of playback commands exists for a plurality of users, that one record is maintained for each user who watches the video image, and that time synchronization needs to be considered when a same video image is played back for a plurality of users may be avoided. Thus, the operations of the video conference are simplified, and the extensibility of the video conference is increased.

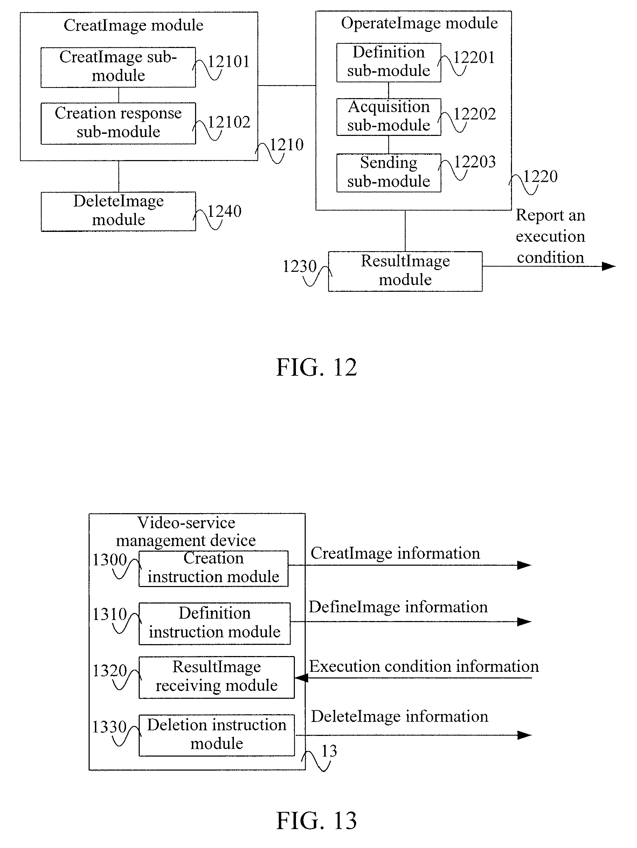

Figure 12 is a schematic structural view of a media resource device according to a specific embodiment.

In Figure 12, the media resource device may be an MRS. In an IMS, the media resource device may be an MRF. In an NGN, the media resource device may be an MRS. The media resource device may perform the above method for implementing a video conference.

The media resource device includes a CreatImage module 1210 and an OperateImage module 1220.

The CreatImage module 1210 creates a video image with ImageId information for a video conference. The CreatImage module 1210 may create a video image when a video conference is created, or after the video conference is successfully created. One or more video images may be created for the video conference.

After receiving a message carrying CreatImage information sent from a video-service management side, the CreatImage module 1210 may create one or more video images according to the CreatImage information. The CreatImage module 1210 may also create a video image without receiving the CreatImage information. For example, after the CreatImage module 1210 receives a message for creating a video conference and successfully creates the video conference according to the message, the CreatImage module 1210 creates one or more video images according to default setting information stored in the media resource device.

In the case that a video image is created according to CreatImage information carried in a message, the CreatImage module 1210 may include a CreatImage sub-module 12101 and a creation response sub-module 12102.

When or after a video conference is created, after receiving a message carrying CreatImage information sent from the video-service management side, the CreatImage sub-module 12101 creates a video image for the video conference according to the CreatImage information carried in the message.

The creation response sub-module 12102 returns a response message to the video-service management side according to a creation execution condition of the CreatImage sub-module 12101. The response message may carry information indicating that the video image is successfully created, and may also carry information indicating that the video image fails to be created. The information indicating that the video image is successfully created may include one or more of: ID information of a video conference, the number of created video images, attribute information of each video image, and identification information for a successful creation.

After the CreatImage module 1210 successfully creates the video image, the OperateImage module 1220 defines an image data source and an image data output for the successfully created video image, acquires image data according to the image data source of the video image with the ImageId information, and sends the image data according to information about the image data output of the video image with the ImageId information.

The image data source defined by the OperateImage module 1220 for the video image represents input information of the video image. The image data source may be a preset video file, and may also be information of one or more users who participate in the video conference. Definitely, the image data source may also be a preset video file and information of a user who participates in the video conference, and may also be a preset video file and information of some users who participate in the video conference.

The image data output defined by the OperateImage module 1220 for the video image represents output information of the video image. The image data output information may be information of a user who participates in the video conference, or information of some users who participate in the video conference, and/or storage position information of the video file.

The OperateImage module 1220 may also define other contents for the created video image. For example, the OperateImage module 1220 defines information adapted to illustrate the video image such as a video conference that the video image belongs to and remark information of the video image; or defines an image picture attribute for the video image (which is equivalent to modifying the image picture attribute of the created video image). Other examples will not be enumerated herein.

The OperateImage module 1220 may define parameters such as an image data source, an image data output, and an image picture attribute for the created video image, after receiving a message carrying DefineImage information sent from the video-service management side. The OperateImage module 1220 may also perform the define-operation on the created video image without receiving the DefineImage information. For example, the OperateImage module 1220 performs the define-operation on the created video image according to default setting information stored in the media resource device. The OperateImage module 1220 may acquire input image data and output image data according to instructions of the video-service management side.

The OperateImage module 1220 may include a definition sub-module 12201, an acquisition sub-module 12202, and a sending sub-module 12203.

The definition sub-module 12201 defines an image data source and an image data output for the created video image according to DefineImage information sent from the video-service management side, and returns a response message to the video-service management side. The DefineImage information carried in the message may include ImageId information, image data source information, and image data output information. Optionally, the DefineImage information may also include image picture attribute information. If the definition sub-module 12201 defines the video image according to default setting information stored in the media resource device, the default setting information may include the ImageId information, the image data source information, and image data output information. The message carrying the DefineImage information, the response message returned by the definition sub-module 12201, and the like are as described in the above method embodiments.

It should be noted that after the definition sub-module 12201 defines the video image, the information defined for the video image may be modified. For example, during the video conference, when a user joins or exits the video conference, parameters such as the image data source and the image data output of the video image may be changed, and at this time, the definition sub-module 12201 needs to modify the parameters of the video image. The modification process may include: modifying the image data output of the video image for changing users that watch the video image.
Definitely, the definition sub-module 12201 may also modify other definition information of the video image, for example, the definition sub-module 12201 adds user information into and/or removes user information from the image data source of the video image. The modification operation may be performed by the definition sub-module 12201 before or during processes such as the video playback process and the video recording process. The specific modification process may be as described in the above method embodiments.

After redefining the parameters of the video image, the definition sub-module 12201 may return response information to the video-service management side for notifying the video-service management side that the parameters of the video image are successfully defined.

The acquisition sub-module 12202 searches for the image data source of the video image according to the ImageId information sent from the video-service management side, and acquires preset image data and/or image data of an input user according to the found image data source.

Specifically, the ImageId information may be the ImageId information carried in the DefineImage information, or ImageId information contained in information for acquiring the image data carried in a message separately sent from the video-service management side. That is to say, the acquisition sub-module 12202 may directly acquire the image data according to the image data source defined for the video image after the definition sub-module 12201 successfully performs the operation of defining the video image. The acquisition sub-module 12202 may also acquire the image data according to the ImageId information in the information for acquiring the image data and the image data source defined for the video image, after receiving the message carrying the information for acquiring the image data.

The sending sub-module 12203 sends the image data acquired by the acquisition sub-module 12202 to a user and/or a video file according to the image data output information of the video image.

Specifically, the sending sub-module 12203 may directly send the image data according to the image data output defined for the video image after the acquisition sub-module 12202 successfully performs the operation of acquiring the image data (including sending the image data to a user, and/or sending the image data to a video file, i.e., recording a video file). After receiving a message carrying information for sending the image data, the sending sub-module 12203 may also send the image data according to ImageId information in the information for sending the image data and the image data output defined for the video image. The sending sub-module 12203 sends the image data according to one or more preset video files. The sending sub-module 12203 may also send the image data according to the image data of the input user, or send the image data according to the preset video file and the image data of the input user. The sending sub-module 12203 may send the image data to a user for implementing video playback. The sending sub-module 12203 may also send the image data to a video file for implementing video recording. The message carrying the information for sending the image data, the number of the input users, the number of the preset video files, and the like are as described in the above method embodiments.

In other specific embodiments, the media resource device may optionally include a ResuItlmage module 1230. The ResultImage module 1230 reports an execution condition of the OperateImage module 1220 to the video-service management side, for example, reports execution condition information for acquiring the image data that is performed by the acquisition sub-module 12202, and execution condition information for sending the image data that is performed by the sending sub-module 12203 to the video-service management side. The information carried in the report message is as described in the above method embodiments.

In an embodiment of the present invention, the media resource device may optionally include a DeleteImage module 1240.

The DeleteImage module 1240 deletes the created video image according to ImageId information in DeleteImage information sent from the video-service management side. After deleting the video image, the DeleteImage module 1240 may return response information to the video-service management side for notifying the video-service management side that the video image is successfully deleted. Details are as described in the above method embodiments.

The operations performed by the video-service management device are as described in the above embodiments for the video-service management side, and the AS or the S-CSCF. The operations performed by the media resource device are as described in the embodiments for the MRS. The details will not be described herein again.

A video-service management device is illustrated below with reference to Figure 13.

Figure 13 is a schematic structural view of a video-service management device according to a specific embodiment. The video-service management device in Figure 13 may be an AS, an S-CSCF, or the like. The video-service management device 13 includes a creation instruction module 1300 and a definition instruction module 1310. The video-service management device 13 may optionally further include a ResultImage receiving module 1320 and/or a deletion instruction module 1330.

The creation instruction module 1300 sends CreatImage information to a media resource device for instructing the media resource device to create a video image for a video conference. The creation instruction module 1300 may send the CreatImage information to the media resource device according to creation instruction information received by the video-service management device 13 from a video conference terminal.

The definition instruction module 1310 sends DefineImage information containing ImageId information to the media resource device for instructing the media resource device to define an image data source and an image data output for a video image with the ImageId information. The definition instruction module 1310 may send the DefineImage information to the media resource device according to definition instruction information received by the video-service management device 13 from the video conference terminal.

The ResultImage receiving module 1320 receives execution condition information for acquiring image data and execution condition information for sending the image data reported by the media resource device. The ResultImage receiving module 1320 may send the received execution condition information for acquiring the image data and execution condition information for sending the image data to the video conference terminal.

The deletion instruction module 1330 sends DeleteImage information containing ImageId information to the media resource device for instructing the media resource device to delete a video image with the ImageId information. The deletion instruction module 1330 may send the DeleteImage information to the media resource device after receiving deletion instruction information sent from the video conference terminal.

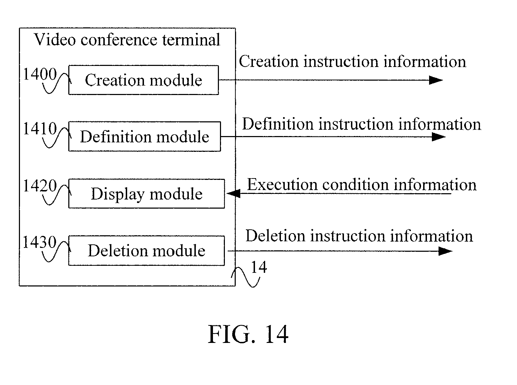

A video conference terminal provided in an embodiment of the present invention is illustrated below with reference to Figure 14.

The video conference terminal may be a common personal computer (PC).

Figure 14 is a schematic structural view of a video conference terminal according to a specific embodiment. A video conference terminal 14 in Figure 14 includes a creation module 1400 and a definition module 1410. The video conference terminal 14 may optionally further include a display module 1420 and/or a deletion module 1430.

After receiving a creation command input from outside, the creation module 1400 sends creation instruction information to a video-service management device according to the creation command for triggering the video-service management device to send CreatImage information to a media resource device. The creation module 1400 may send the creation instruction information through a customized message.

After receiving a definition command input from outside, the definition module 1410 sends definition instruction information to the video-service management device according to the definition command for triggering the video-service management device to send DefineImage information to the media resource device. The definition module 1410 may send the definition instruction information through a customized message.

The display module 1420 receives execution condition information for acquiring image data and execution condition information for sending the image data sent from the video-service management device, and displays the received execution condition information, for example, on a screen or by a printer.

After receiving a deletion command input from outside, the deletion module 1430 sends deletion instruction information to the video-service management device for triggering the video-service management device to send DeleteImage information containing ImageId information to the media resource device. The deletion module 1430 may send the DeleteImage information through a customized message.

Although the present invention is depicted through the embodiments, it is apparent to those of ordinary skill in the art that variations and changes may be made without departing from the spirit of the present invention, and the variations and changes fall within the scope of the present invention as defined by the appended claims.

Finally, it should be understood that the above embodiments are only used to explain, but not to limit the technical solution of the present invention. In despite of the detailed description of the present invention with referring to above embodiments, it should be understood that various modifications, changes or equivalent replacements can be made by those skilled in the art without departing from the scope of the present invention and covered in the claims of the present invention.

## Claims

1. A method for implementing a video conference, comprising:
creating a video image with ImageId information;
defining an image data source and an image data output for the created video image; and
acquiring and sending image data according to the image data source and the image data output of the video image with the ImageId information.

2. The method according to claim 1, wherein the creating the video image comprises:
creating a video image for a video conference according to CreatImage information sent from a video-service management side.

3. The method according to claim 1, wherein the defining the image data source and the image data output for the created video image comprises:
defining the image data source and the image data output for the video image according to DefineImage information sent from a video-service management side.

4. The method according to claim 1, wherein the acquiring and sending the image data according to the image data source and the image data output of the video image with the ImageId information comprises:
acquiring preset image data and/or acquiring image data of an input user according to the image data source of the video image corresponding to the ImageId information provided by a video-service management side; and
sending the acquired image data to a user participating in a conference and/or to a video file according to the image data output of the video image corresponding to the ImageId information provided by the video-service management side.

5. The method according to claim 1, further comprising:
storing the ImageId information, the image data source, the image data output and image picture attribute information of the video image.

6. The method according to claim 1, further comprising:
modifying one or any combination of the image data source, the image data output, and an image picture attribute of the video image according to information sent from a video-service management side;
and/or
receiving DeleteImage information sent from the video-service management side; and
deleting the created video image according to ImageId information in the DeleteImage information.

7. The method according to any one of claims 1 to 6, further comprising:
sending a report message containing an execution condition of each of the steps to a video-service management side, wherein the report message carries information indicating a successful execution or carries information indicating an unsuccessful execution.

8. A media resource device, comprising:
a CreatImage module, adapted to create a video image with ImageId information for a video conference; and
an OperateImage module, adapted to define an image data source and an image data output for the created video image, and acquire and send image data according to information of the image data source and the image data output of the video image with the ImageId information.

9. The device according to claim 8, wherein the Creatlmage module comprises:
a CreatImage sub-module, adapted to create the video image for the video conference according to CreatImage information sent from a video-service management side when or after the video conference is created; and
a creation response sub-module, adapted to return response information to the video-service management side according to a creation execution condition of the CreatImage sub-module.

10. The device according to claim 8, wherein the OperateImage module comprises:
a definition sub-module, adapted to define the image data source and the image data output for the created video image according to DefineImage information sent from a video-service management side, and return response information to the video-service management side;
an acquisition sub-module, adapted to acquire preset image data and/or acquire image data of an input user according to the image data source of the video image corresponding to the ImageId information provided by the video-service management side; and
a sending sub-module, adapted to send the image data acquired by the acquisition sub-module to a user participating a conference and/or to a video file according to the image data output of the video image corresponding to the ImageId information provided by the video-service management side.

11. The device according to claim 8, further comprising:
a Resultlmage module, adapted to report execution condition information for acquiring the image data, and execution condition information for sending the image data to a video-service management side; and/or
a DeleteImage module, adapted to delete the created video image according to ImageId information in DeleteImage information sent from the video-service management side and return response information to the video-service management side.

12. A method for implementing a video conference, comprising:
sending CreatImage information to a media resource device for instructing the media resource device to create a video image for a video conference; and
sending DefineImage information containing ImageId information to the media resource device for instructing the media resource device to define an image data source and an image data output for a video image with the ImageId information.

13. The method according to claim 12, further comprising:
receiving execution condition information for acquiring image data and execution condition information for sending the image data reported by the media resource device; and/or
sending Deletelmage information containing the ImageId information to the media resource device for instructing the media resource device to delete the video image with the ImageId information.

14. A video-service management device, comprising:
a creation instruction module, adapted to send CreatImage information to a media resource device for instructing the media resource device to create a video image for a video conference; and
a definition instruction module, adapted to send DefineImage information containing ImageId information to the media resource device for instructing the media resource device to define an image data source and an image data output for a video image with the ImageId information.

15. The device according to claim 14, further comprising:
a Resultlmage receiving module, adapted to receive execution condition information for acquiring image data and execution condition information for sending the image data reported by the media resource device; and/or
a deletion instruction module, adapted to send DeleteImage information containing the ImageId information to the media resource device for instructing the media resource device to delete the video image with the ImageId information.

16. A system for implementing a video conference, comprising:
a video-service management device, adapted to send Creatlmage information and DefmeImage information to a media resource device; and
the media resource device, adapted to create a video image with ImageId information for a video conference according to the received Creatlmage information, define an image data source and an image data output for the created video image according to the received DefineImage information, and acquire and send image data according to the image data source and the image data output of the video image with the ImageId information.

17. The system according to claim 16, further comprising:
a video conference terminal, adapted to receive a creation command input from outside, and send creation instruction information to the video-service management device for triggering the video-service management device to send the CreatImage information to the media resource device; and to receive a definition command input from the outside and send definition instruction information to the video-service management device for triggering the video-service management device to send the DefineImage information to the media resource device.

18. A video conference terminal, comprising:
a creation module, adapted to receive a creation command input from outside, and send creation instruction information to a video-service management device for triggering the video-service management device to send CreatImage information to a media resource device; and
a definition module, adapted to receive a definition command input from the outside, and send definition instruction information to the video-service management device for triggering the video-service management device to send DefineImage information to the media resource device.

19. The terminal according to claim 18, further comprising:
a display module, adapted to receive and display execution condition information for acquiring image data and execution condition information for sending the image data sent from the video-service management device; and/or
a deletion module, adapted to receive a deletion command input from the outside, and send deletion instruction information to the video-service management device for triggering the video-service management device to send DeleteImage information containing ImageId information to the media resource device.
